# EUROPEAN PATENT APPLICATION

(11) **EP 4 586 685 A1**
(43) Date of publication of application: **16.07.2025**
(21) Application number: 23870152.8
(22) Date of filing: 31.08.2023
(51) Int. Cl.: H04W 36/00

(54) **COMMUNICATION METHOD AND APPARATUS**

(30) Priority: 27.09.2022 CN 202211185016
(71) Applicant: Huawei Technologies Co., Ltd., Shenzhen, Guangdong 518129 (CN)
(72) Inventor: SUN, Fei, Shenzhen, Guangdong 518129 (CN); ZHU, Yuanping, Shenzhen, Guangdong 518129 (CN); SHI, Yulong, Shenzhen, Guangdong 518129 (CN); ZHU, Shichao, Shenzhen, Guangdong 518129 (CN)
(74) Representative: Maiwald GmbH
(86) International application number: PCT/CN2023/116319
(87) International publication number: WO 2024/066912

(57) **Abstract**

A communication method and apparatus are provided, so that a donor node identifies a mobile IAB node. In this application, the method includes: The donor node sends first information to an IAB node. The first information indicates that the IAB node is to send a mobility state of the IAB node to the donor node. After receiving the first information, the IAB node determines the mobility state of the IAB node based on the first information, and sends the mobility state of the IAB node to the donor node. The donor node identifies, based on the mobility state of the IAB node, that the IAB node is a mobile IAB node.

## Description

### CROSS-REFERENCE TO RELATED APPLICATIONS

This application claims priority to Chinese Patent Application No. 202211185016.5, filed with the China National Intellectual Property Administration on September 27, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Compared with a 4th generation mobile communication system, 5th generation mobile communication (5G) has stricter requirements on network performance indicators, for example, a capacity increased by 1000 times, a wider coverage requirement, and ultra-high reliability and ultra-low latency. Considering that high-frequency carrier frequency resources are abundant, to meet an ultra-high capacity requirement of 5G, in a hotspot area, high-frequency small cell networking is increasingly popular. A high-frequency carrier has a poor propagation characteristic, is severely attenuated due to blocking, and has small coverage. Therefore, a large quantity of small cells need to be densely deployed. Correspondingly, it is costly to provide optical fiber backhaul for the large quantity of densely deployed small cells, and construction is difficult. Therefore, an economical and convenient backhaul solution is needed. In addition, in consideration of the wide coverage requirement, it is difficult and costly to deploy optical fibers for network coverage in some remote areas. Therefore, a flexible and convenient access and backhaul solution also needs to be designed. An integrated access and backhaul (integrated access and backhaul, IAB) technology provides an idea to resolve the foregoing two problems: In the IAB technology, a wireless transmission solution is used for both an access link (access link) and a backhaul link (backhaul link), to reduce optical fiber deployment. In an IAB network, an IAB node (IAB node) may provide a radio access service for a user equipment (user equipment, UE), and service data of the UE is transmitted by the IAB node that is connected to a donor node (donor node) over a wireless backhaul link.

In R16/17, the IAB node is fixed at a location, that is, the IAB node is statically deployed. However, mobility of the IAB node is further considered in R18. How the donor node identifies a mobile IAB node is an urgent technical problem to be resolved currently.

### SUMMARY

This application provides a communication method and apparatus, so that a donor node identifies a mobile IAB node.

According to a first aspect, this application provides a communication method, including: A donor node sends first information to an IAB node. The first information indicates that the IAB node is to send a mobility state of the IAB node to the donor node. Correspondingly, the IAB node receives the first information from the donor node, and sends the mobility state of the IAB node to the donor node based on an indication of the first information. The donor node receives the mobility state from the IAB node.

In the foregoing technical solution, the donor node indicates the IAB node to determine the mobility state of the IAB node, and report the mobility state of the IAB node to the donor node, so that the donor node can identify, based on the mobility state of the IAB node, whether the IAB node is a mobile IAB node. Further, the donor node may determine whether the donor node supports the mobile IAB node, or determine, for the mobile IAB node, another donor node that can support the mobile IAB node, to improve a success rate of requesting, by the mobile IAB node, to access a donor node, and avoid a case in which the donor node rejects the mobile IAB node when the mobile IAB node requests to access the donor node, and consequently the mobile IAB node cannot provide a service for a UE, that is, the UE cannot successfully access a network, and network performance of the UE is affected.

In a possible implementation, when the IAB node is in inactive state or idle state, the mobility state of the IAB node is determined by the IAB node based on a first speed state parameter and a record of performing cell reselection by the IAB node; and/or when the IAB node is in connected state, the mobility state of the IAB node is determined by the IAB node based on a first speed state parameter and a record of performing cell handover by the IAB node. The first speed state parameter is used by the IAB node to determine the mobility state of the IAB node. In the foregoing technical solution, an implementation in which the IAB node determines the mobility state of the IAB node based on that the IAB node is in inactive state, idle state, or connected state is provided. In a possible implementation, the first information includes one or more of the following: first capability information, indicating that the donor node has a capability of providing a service for a mobile IAB node and a non-mobile IAB node; second capability information, indicating that the donor node has a capability of providing a service for a mobile IAB node; a first report indication, indicating that the IAB node is to send the mobility state of the IAB node to the donor node; or the first speed state parameter, used by the IAB node to determine the mobility state of the IAB node.

In a possible implementation, when determining that the IAB node migrates from being managed by the donor node to being managed by another donor node, the donor node further sends a handover request to the another donor node. The handover request includes the mobility state of the IAB node.

In the foregoing technical solution, the donor node may further send the mobility state of the IAB node to the another donor node, so that the another donor node determines whether the another donor node can support the mobile IAB node, and further determines whether the another donor node can support access of the mobile IAB node. This avoids a case in which the mobile IAB node is rejected when the mobile IAB node requests access, and consequently the mobile IAB node cannot provide a relay service for the UE.

In a possible implementation, the donor node further sends second information to a UE. The second information is used for the UE to send a mobility state of the UE to the donor node. Correspondingly, the UE receives the second information from the donor node, and the UE sends the mobility state of the UE to the donor node based on the second information. The donor node receives the mobility state from the UE, and the donor node determines, based on the mobility state of the UE, whether the UE and the IAB node move together.

In the foregoing technical solution, the donor node determines whether the UE and the IAB node move together, to determine how to provide a service for the UE. This improves a success rate of accessing a network by the UE, that is, improves network performance of the UE.

In a possible implementation, when the UE is in inactive state or idle state, the mobility state of the UE is determined by the UE based on a second speed state parameter and a record of performing cell reselection by the UE; and/or when the UE is in connected state, the mobility state of the UE is determined by the UE based on a second speed state parameter and a record of performing cell handover by the UE. The second speed state parameter is used by the UE to determine the mobility state of the UE. In the foregoing technical solution, an implementation in which the UE determines the mobility state of the UE when the UE is in inactive state, idle state, or connected state is provided.

In a possible implementation, the second information includes one or more of the following: a second report indication, indicating the UE to send the mobility state of the UE to the donor node; or the second speed state parameter for determining the mobility state of the UE by the UE.

In a possible implementation, that the donor node determines, based on the mobility state of the UE, whether the UE and the IAB node move together includes: When determining that the mobility state of the UE is the same as the mobility state of the IAB node, the donor node determines that the UE and the IAB node move together. In the foregoing technical solution, the donor node determines, based on the mobility states of the UE and the IAB, whether the UE and the IAB move together. This helps improve accuracy of determining that the UE and the IAB move together.

According to a second aspect, this application provides a communication method, including: A UE sends historical information of the UE to a donor node. Correspondingly, the donor node receives the historical information from the UE. The donor node determines, based on the historical information of the UE, whether the UE and an IAB node move together. When determining that the UE and the IAB node move together, the donor node uses a mobility state of the IAB node as a mobility state of the UE.

In a possible implementation, when determining that duration in which the UE stays in a last cell in a historical cell list of the UE is greater than a duration threshold, the donor node determines that the UE and the IAB node move together; or when determining that duration in which the UE stays in a last cell in a historical cell list of the UE is less than or equal to a duration threshold, the donor node determines that the UE and the IAB node do not move together.

In a possible implementation, that the donor node determines that the UE and the IAB node move together may be specifically: determining that the UE and the IAB node move together with a vehicle, that is, the donor node identifies the in-vehicle IAB and the in-vehicle UE.

In the foregoing technical solution, the donor node determines whether the UE and the IAB node move together, to determine how to provide a service for the UE. This improves a success rate of accessing a network by the UE, that is, improves network performance of the UE.

According to a third aspect, this application provides a communication method, including: A donor node sends a mobile cell indication to a UE. Correspondingly, the UE receives the mobile cell indication from the donor node. The mobile cell indication indicates that a cell in which the UE is located is a mobile cell. The UE determines, based on the mobile cell indication, whether the UE and an IAB node move together.

In a possible implementation, after determining, based on the mobile cell indication, that a cell in which the UE is currently located is a mobile cell, the UE needs to further determine whether an IAB node accessed by the UE changes.

In a possible implementation, the UE starts a timer of preset duration. In a process (namely, a preset time period) from starting to ending of the timer, if determining that the IAB node accessed by the UE does not change within the preset time period, the UE determines that the UE and the IAB node move together; or if determining that the IAB node accessed by the UE changes within the preset time period (for example, the UE accesses a new IAB node), the UE determines that the UE and the IAB node do not move together. Optionally, the preset time period may be determined by the UE based on time information and a current moment. The time information may be sent by the donor node to the UE.

In a possible implementation, that the UE determines whether an IAB node accessed by the UE changes may be specifically: The UE monitors a cell identity (for example, a physical cell identifier (physical cell index, PCI) of a cell) broadcast by the cell in which the UE is located, and determine that the UE and the IAB node move together when determining that the cell identity of the cell in which the UE is located remains unchanged within the preset time period; or determine that the UE and the IAB node do not move together when determining that the cell identity of the cell in which the UE is located changes within the preset time period.

In a possible implementation, that the UE determines whether an IAB node accessed by the UE changes may be specifically: The UE monitors an identifier that is of the IAB node and that is broadcast by the cell in which the UE is located; and when determining that the identifier of the IAB node remains unchanged within the preset time period, determines that the UE and the IAB node move together; or when determining that the identifier of the IAB node changes within the preset time period, determines that the UE and the IAB node do not move together.

In a possible implementation, that the UE determines whether an IAB node accessed by the UE changes may be specifically: The UE determines that the UE and the IAB node move together when determining that a timing advance (timing advance, TA) remains unchanged within the preset time period; or determines that the UE and the IAB node do not move together when determining that a TA changes within the preset time period.

In the foregoing technical solution, the UE determines whether the UE and the IAB node move together. When determining that the UE and the IAB node move together, the UE may preferentially select the mobile cell to serve the UE, to ensure service experience of the UE.

According to a fourth aspect, this application provides a communication method, including: A donor node determines that a PCI of a cell served by an IAB node conflicts with or is about to conflict with a PCI of a neighbor cell of the cell. The donor node allocates a new PCI to the cell served by the IAB node, so that the new PCI does not conflict with the PCI of the neighbor cell of the cell. The donor node sends the new PCI to the IAB node.

In a possible implementation, that a donor node determines that a PCI of a cell served by an IAB node conflicts with or is about to conflict with a PCI of a neighbor cell of the cell may be specifically: The donor node determines, based on a neighboring relation table (neighboring relation table, NRT) and a neighboring cell list (neighboring cell list, NCL), whether the PCI of the cell served by the IAB node conflicts with or is about to conflict with a PCI of another cell.

In a possible implementation, that the donor node allocates a new PCI to the cell served by the IAB node may be specifically: The donor node allocates, based on the NRT and the NCL, the new PCI to the cell served by the IAB node.

In this way, the cell served by the IAB node may provide a service for the UE based on the new PCI, to avoid a problem that the PCIs of the two cells conflict with each other. This helps improve communication quality.

According to a fifth aspect, this application provides a communication method, including: An IAB node sends neighbor cell information of the IAB node to a donor node. Correspondingly, the donor node receives the neighbor cell information from the IAB node. The donor node updates an automatic neighbor relation (automatic neighbor relation, ANR) based on the neighbor cell information of the IAB node. In this application, updating the ANR is equivalent to updating two tables (that is, an NRT and an NCL) maintained based on the ANR.

In a possible implementation, the neighbor cell information of the IAB node includes cell information of one or more cells that is measured and reported by the IAB node. For example, information about the one or more cells may be cell information of one or more specific cells that is obtained by the IAB node by monitoring and measuring a broadcast signal of the one or more specific cells based on an indication of the donor node. For the donor node, the specific cell is a neighbor cell of the donor node.

In a possible implementation, the cell information of the neighbor cell includes a cell identity and a mobility indication that are of the neighbor cell. The mobility indication indicates whether the neighbor cell is a mobile cell.

In a possible implementation, if determining, based on the cell information of the neighbor cell, that the neighbor cell is a mobile cell, the donor node may not maintain the cell information of the neighbor cell in the NRT or the NCL; or if determining, based on the cell information of the neighbor cell, that the neighbor cell is a fixed cell, the donor node may maintain the cell information of the neighbor cell in the NRT or the NCL. In this way, a case in which the neighbor cell of the IAB node changes at a high frequency, that is, the donor node frequently updates the ANR, due to mobility of the neighbor cell is avoided. This helps reduce unnecessary overheads.

In a possible implementation, if determining, based on the cell information of the neighbor cell, that the neighbor cell is a mobile cell, the donor node may maintain the cell information of the neighbor cell in the NRT or the NCL, that is, the donor node still marks the neighbor cell as the mobile cell; or if determining, based on the cell information of the neighbor cell, that the neighbor cell is a fixed cell, the donor node may maintain the cell information of the neighbor cell in the NRT or the NCL. In this way, the donor node may accurately predict or determine, based on a feature of the mobile cell, whether a PCI of a cell served by the IAB node conflicts with or is about to conflict with a PCI of another cell (namely, the neighbor cell), to ensure communication stability.

In a possible implementation, before the IAB node sends the neighbor cell information of the IAB node to the donor node, the IAB node further monitors a broadcast signal of a specific cell indicated by the donor node, to determine whether the specific cell is a mobile cell. When the IAB node determines that the specific cell is a fixed cell, the IAB node sends cell information of the specific cell to the donor node; or when the IAB node determines that the specific cell is a mobile cell, the IAB node does not send cell information of the specific cell to the donor node. This helps prevent the donor node from frequently updating the ANR based on the neighbor cell information of the IAB node, to reduce unnecessary overheads.

According to a sixth aspect, an embodiment of this application provides a communication apparatus. The apparatus has a function of implementing the donor node, the IAB node, or the UE in any one of the first aspect or the possible implementations of the first aspect; or the apparatus has a function of implementing the donor node, the IAB node, or the UE in any one of the second aspect or the possible implementations of the second aspect; or the apparatus has a function of implementing the donor node, the IAB node, or the UE in any one of the third aspect or the possible implementations of the third aspect; or the apparatus has a function of implementing the donor node or the IAB node in any one of the fourth aspect or the possible implementations of the fourth aspect; or the apparatus has a function of implementing the donor node or the IAB node in any one of the fifth aspect or the possible implementations of the fifth aspect.

The Function of the foregoing communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transmitting-receiving module. The processing module is configured to support the apparatus in performing a corresponding function of the donor node, the IAB node, or the UE in any one of the first aspect or the implementations of the first aspect, or performing a corresponding function of the donor node, the IAB node, or the UE in any one of the second aspect or the implementations of the second aspect, or performing a corresponding function of the donor node, the IAB node, or the UE in any one of the third aspect or the implementations of the third aspect, or performing a corresponding function of the donor node or the IAB node in any one of the fourth aspect or the implementations of the fourth aspect, or performing a corresponding function of the donor node or the IAB node in any one of the fifth aspect or the implementations of the fifth aspect. The transmitting-receiving module is configured to support communication between the apparatus and another communication device. For example, when the apparatus is a UE, the apparatus may receive second information from the donor node. The communication apparatus may further include a storage module. The storage module is coupled to the processing module, and stores program instructions and data that are necessary for the apparatus. In an example, the processing module may be a processor, the transmitting-receiving module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform a corresponding function of the donor node, the IAB node, or the UE in any one of the first aspect or the implementations of the first aspect; or perform a corresponding function of the donor node, the IAB node, or the UE in any one of the second aspect or the implementations of the second aspect; or perform a corresponding function of the donor node, the IAB node, or the UE in any one of the third aspect or the implementations of the third aspect; or perform a corresponding function of the donor node or the IAB node in any one of the fourth aspect or the implementations of the fourth aspect; or perform a corresponding function of the donor node or the IAB node in any one of the fifth aspect or the implementations of the fifth aspect.

Optionally, the apparatus may further include a communication interface, and the processor is coupled to the communication interface. When the apparatus is the donor node, the IAB node, or the UE, the communication interface may be a transceiver or an input/output interface. When the apparatus is a chip included in the donor node, the IAB node, or the UE, the communication interface may be an input/output interface of the chip. Optionally, the input/output interface may be an input/output circuit.

According to a seventh aspect, an embodiment of this application provides a computer-readable storage medium, storing a computer program or instructions. When the computer program or the instructions are executed by a communication apparatus, the communication apparatus specifically performs a corresponding function of the donor node, the IAB node, or the UE in any one of the first aspect or the implementations of the first aspect; or performs a corresponding function of the donor node, the IAB node, or the UE in any one of the second aspect or the implementations of the second aspect; or performs a corresponding function of the donor node, the IAB node, or the UE in any one of the third aspect or the implementations of the third aspect; or performs a corresponding function of the donor node or the IAB node in any one of the fourth aspect or the implementations of the fourth aspect; or performs a corresponding function of the donor node or the IAB node in any one of the fifth aspect or the implementations of the fifth aspect.

According to an eighth aspect, an embodiment of this application provides a computer program product. When a computer reads and executes the computer program product, the computer is enabled to perform a corresponding function of the donor node, the IAB node, or the UE in any one of the first aspect or the implementations of the first aspect; or perform a corresponding function of the donor node, the IAB node, or the UE in any one of the second aspect or the implementations of the second aspect; or perform a corresponding function of the donor node, the IAB node, or the UE in any one of the third aspect or the implementations of the third aspect; or perform a corresponding function of the donor node or the IAB node in any one of the fourth aspect or the implementations of the fourth aspect; or perform a corresponding function of the donor node or the IAB node in any one of the fifth aspect or the implementations of the fifth aspect.

According to a ninth aspect, an embodiment of this application provides a communication system. The communication system includes the donor node, the IAB node, and the UE in any one of the first aspect or the implementations of the first aspect; or the communication system includes the donor node, the IAB node, and the UE in any one of the second aspect or the implementations of the second aspect; or the communication system includes the donor node, the IAB node, and the UE in any one of the third aspect or the implementations of the third aspect; or the communication system includes the donor node and the IAB node in any one of the fourth aspect or the implementations of the fourth aspect; or the communication system includes the donor node and the IAB node in any one of the fifth aspect or the implementations of the fifth aspect.

For technical effects that can be achieved in any one of the sixth aspect to the ninth aspect, refer to the descriptions of beneficial effects in the first aspect to the fifth aspect. Details are not described herein again.

### BRIEF DESCRIPTION OF DRAWINGS

FIG. 1 is a diagram of an IAB networking scenario;
FIG. 2 is a diagram of an IAB network architecture;
FIG. 3 is a diagram of a scenario in which a mobile IAB and a UE are deployed in a vehicle according to an example of this application;
FIG. 4 is a schematic flowchart of a first communication method according to an example of this application;
FIG. 5 is a schematic flowchart of a second communication method according to an example of this application;
FIG. 6 is a schematic flowchart of a third communication method according to an example of this application;
FIG. 7 is a schematic flowchart of a fourth communication method according to an example of this application;
FIG. 8 is a diagram of another scenario in which a mobile IAB and a UE are deployed in a vehicle according to an example of this application;
FIG. 9 is a schematic flowchart of a fifth communication method according to an example of this application;
FIG. 10 is a schematic flowchart of a sixth communication method according to an example of this application;
FIG. 11 is a diagram of a structure of a communication apparatus according to an example of this application; and
FIG. 12 is a diagram of a structure of another communication apparatus according to an example of this application.

### DESCRIPTION OF EMBODIMENTS

To make objectives, technical solutions, and advantages of this application clearer, the following further describes this application in detail with reference to the accompanying drawings. A specific operation method in a method embodiment may also be used in an apparatus embodiment or a system embodiment. In the descriptions of this application, unless otherwise specified, "a plurality of" means two or more than two.

In an IAB network, an IAB node may also be referred to as a relay node (relay node, RN), and includes an MT (mobile termination, mobile termination) part and a DU (distributed unit, distributed unit) part. When facing a parent node of the IAB node, the IAB node may serve as a user equipment, that is, a role of the MT. When facing a child node of the IAB node (the child node may be another IAB node or a common UE), the IAB node is considered as a network device, that is, a role of the DU.

A donor node may also be referred to as an IAB donor (IAB donor) or a donor base station (DgNB, donor gNodeB). The donor node may be an access network element having a complete base station function, or may be an access network element in a form in which a central unit (central unit, CU) is separated from a distributed unit (distributed unit, DU). The donor node is connected to a core (for example, connected to a 5G core (5G core, 5GC)) network element that provides a service for the UE, and provides a wireless backhaul function for the IAB node. For ease of description, the central unit of the donor node is briefly referred to as a donor CU (or CU), and the distributed unit of the donor node is briefly referred to as a donor DU. Alternatively, the donor CU may alternatively be in a form in which a control plane (control plane, CP) is separated from a user plane (user plane, UP). For example, the CU may include one CU-CP and one CU-UP (or more CU-UPs).

The IAB node is connected to a core network via the donor node. For example, in a 5G standalone (standalone, SA) architecture, the IAB node is connected to the 5GC via the donor node. In a 5G architecture of dual connectivity (dual connectivity, DC) or multi-connectivity (multi-connectivity, MC) (for example, a non-standalone (non-standalone, NSA) scenario or an NR-DC scenario), the IAB node may be connected to an evolved packet core network (evolved packet core, EPC) via an evolved base station (evolved NodeB, eNB), or may be connected to a 5G core network via the donor node.

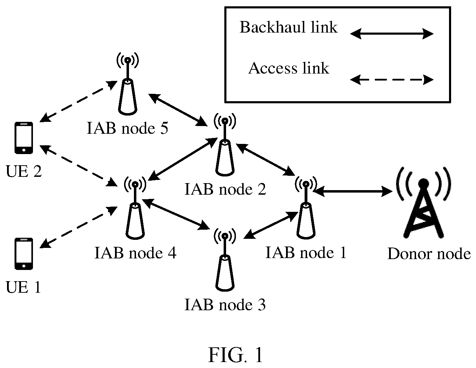

In the IAB network, one or more IAB nodes may be included on a transmission path between the UE and the donor node. Each IAB node needs to maintain a wireless backhaul link to the parent node, and also needs to maintain a wireless link to the child node. If the child node of the IAB node is the UE, there is a wireless access link between the IAB node and the child node (namely, the UE). If the child node of the IAB-node is the another IAB node, there is a wireless backhaul link between the IAB node and the child node (namely, the another IAB node). For example, refer to FIG. 1. On a path "UE 1→IAB node 4→IAB node 3→IAB node 1→donor node", the UE 1 accesses the IAB node 4 over a wireless access link, the IAB node 4 is connected to the IAB node 3 over a wireless backhaul link, the IAB node 3 is connected to the IAB node 1 over a wireless backhaul link, and the IAB node 1 is connected to the donor node over a wireless backhaul link.

In embodiments of this application, an IAB node accessed by the UE may be denoted as an access IAB node, and an IAB node that provides a wireless backhaul service for the UE or the IAB node is denoted as an intermediate IAB node. For example, with reference to FIG. 1, on the path "UE 1→IAB node 4→IAB node 3→IAB node 1→donor node", the IAB node 4 is an access IAB node, and the IAB node 3 and the IAB node 1 are intermediate IAB nodes. It should be noted that an IAB node is an access IAB node for a UE that accesses the IAB node, and is an intermediate IAB node for a UE that accesses another IAB node. Therefore, whether an IAB node is specifically an access IAB node or an intermediate IAB node is not fixed and needs to be determined based on a specific application scenario.

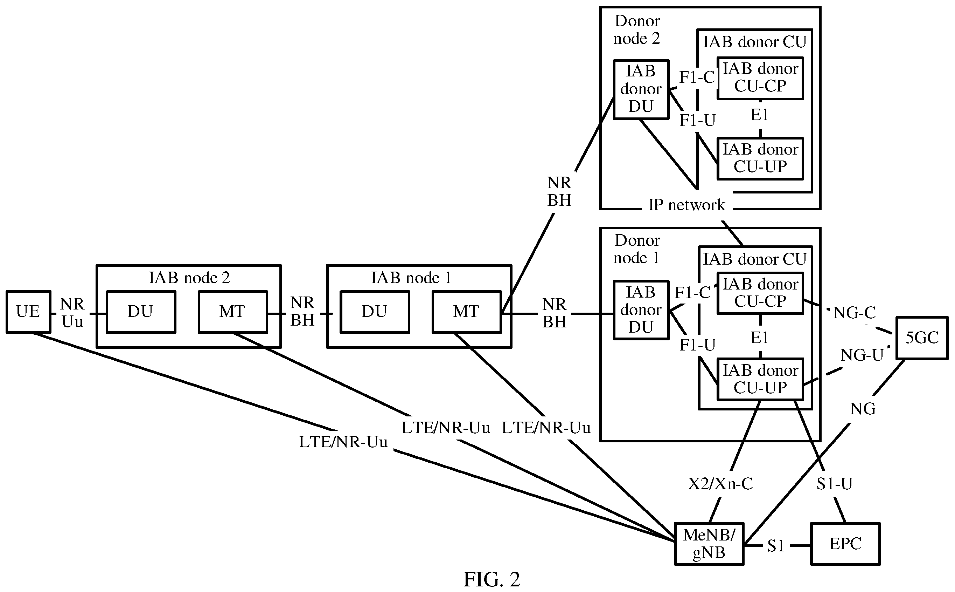

FIG. 2 is a diagram of an IAB network architecture, including a standalone IAB network and a non-standalone IAB network. For system architectures in the two networking scenarios, refer to content described in the Background. In the Background description, it is mentioned that the IAB node includes the MT part and the DU part, the donor node may be further divided into the DU part and the CU part, and the CU may be further divided into the CU-CP part and the CU-UP part. FIG. 2 further shows, based on specific nodes, an example architecture in which an IAB node is connected to a donor node over a wireless backhaul link.

There is an F1 interface between a DU part (denoted as an IAB-DU) of each IAB node and a CU part (denoted as an IAB donor CU) of the donor node. The F1 interface includes two parts: a control plane part and a user plane part. The user plane part is maintained between the IAB-DU and the IAB donor CU-UP, and the control plane part is maintained between the IAB-DU and the IAB donor CU-CP. The F1 interface between the IAB-DU and the IAB donor CU is not shown in FIG. 2.

When the IAB node works in a standalone (SA) mode, the IAB node may be single-connected to one parent node, or dual-connected to two parent nodes. The two parent nodes may be controlled by a same donor node, or may be separately controlled by different donor nodes. An F1 interface needs to be established between the DU part of the IAB node and a donor node, and the donor node may be connected to a 5G core network (5G core, 5GC). The IAB donor CU-CP is connected to a control plane network element (for example, an access and mobility management function AMF) in the 5GC through an NG control plane interface, and the IAB donor CU-UP is connected to a user plane network element (for example, a user plane function UPF) in the 5GC through an NG user plane interface.

When the IAB node works in a non-standalone (NSA) mode (or an EN-DC mode), the IAB donor CU-UP may be connected to an EPC (for example, connected to a serving gateway (serving gateway, SGW)) through an S1 user plane interface. There is an LTE Uu air interface connection between a master base station (Master eNB, MeNB) and the MT of the IAB node, there is an X2-C interface between the MeNB and the IAB donor CU-CP, and the MeNB is connected to the EPC through an S1 interface (including an S1 user plane interface and an S1control plane interface ).

In another possible case, the MeNB in FIG. 2 may alternatively be replaced with a 5G base station gNB, and the LTE-Uu interface is correspondingly replaced with an NR-Uu interface. The gNB may set up a user plane interface and/or a control plane interface with the 5GC. The gNB and the IAB donor provide a dual connectivity service for the IAB node. The gNB may serve as a role of the master base station of the IAB node or a role of a secondary base station of the IAB node.

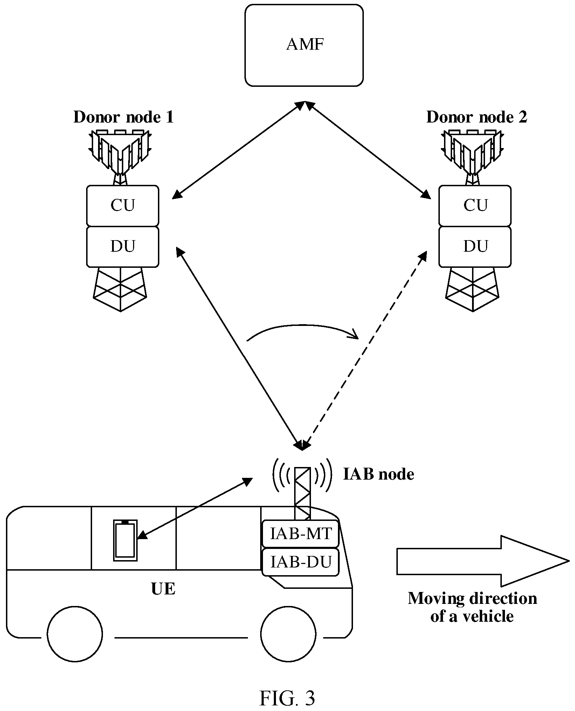

In R16/17, the IAB node is fixed at a location, that is, the IAB node is statically deployed. In R18, mobility of the IAB node is further considered, that is, the IAB node may be in a mobility state in a mobility scenario. The mobility scenario is, for example, an in-vehicle scenario. In the in-vehicle scenario, the UE and the IAB node may move together with the vehicle. FIG. 3 shows an in-vehicle scenario according to an example of this application. An IAB node and a UE are deployed in a vehicle. The IAB node may be further classified into an IAB MT and an IAB DU. At a moment t1, the IAB node accesses a donor node 1, and the UE and the IAB node move together with the vehicle. At a moment t2, the IAB node accesses a donor node 2, where t1 is less than t2. Further, both the donor node 1 and the donor node 2 are connected to an AMF, and a donor node (namely, the donor node 1 or the donor node 2) may be classified into an IAB donor CU and an IAB donor DU.

In a mobility scenario, a network side (for example, a donor node) needs to know a mobility state of an IAB node. How the network side obtains the mobility state of the IAB node is an urgent problem to be resolved currently.

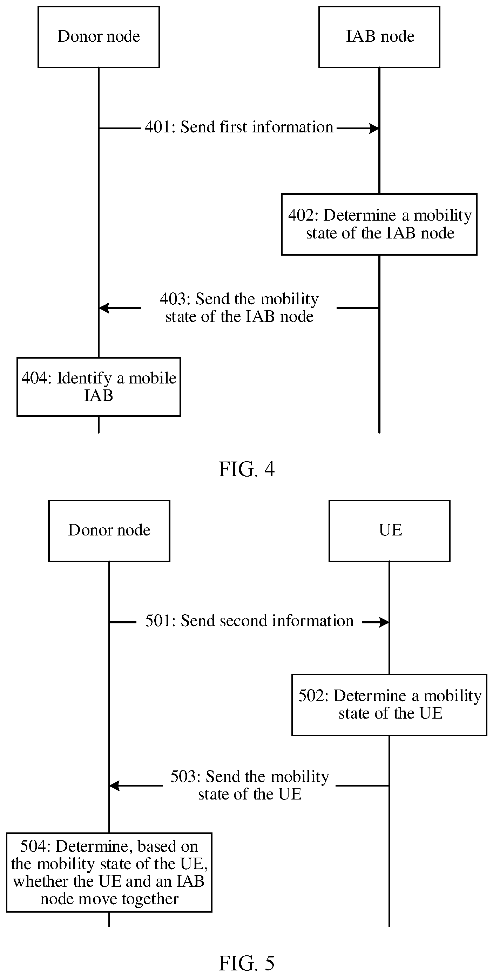

FIG. 4 is a schematic flowchart of a first communication method according to an example of this application. The communication method is specifically used by a donor node to obtain a mobility state of an IAB node. In this application, an IAB in the mobility state is referred to as a mobile IAB, and an IAB not in the mobility state is referred to as a non-mobile IAB.

Step 401: The donor node sends first information to the IAB node. Correspondingly, the IAB node receives the first information from the donor node. The first information is used by the IAB node to send the mobility state of the IAB node to the donor node.

Optionally, a CU in the donor node sends the first information to an MT in the IAB node. Correspondingly, the MT in the IAB node receives the first information from the CU in the donor node.

Optionally, the first information includes one or more of the following (1) to (4):
(1) First capability information: The first capacity information indicates that the donor node has a capability of providing a service for a mobile IAB node and a non-mobile IAB node, and may be specifically represented as IAB-support.
(2) Second capability information: The second capacity information indicates that the donor node has a capability of providing a service for a mobile IAB node, and may be specifically represented as Mobile IAB-support.
(3) First report indication: The first report indication indicates that the IAB node is to send the mobility state of the IAB node to the donor node, and may be specifically represented as a mobility state report (mobility state report) indication.
(4) First speed state parameter: The first speed state parameter is used by the IAB node to determine the mobility state of the IAB node, and may be specifically represented as speed State Reselection Pars.

Optionally, the donor node may send the first information to the IAB node through unicast or broadcast. For example, the donor node sends a system information block (system information block, SIB) 2 to the IAB node. The SIB 2 includes the first information. For another example, the donor node sends radio resource control (radio resource control, RRC) to the IAB node. The RRC includes the first information. In another possible implementation, the first speed state parameter may alternatively be pre-configured in the IAB node by an operation, maintenance, and management (operation, administration, and maintenance, OAM).

That the IAB node sends the mobility state of the IAB node to the donor node based on the first information may be divided into the following step 402 and step 403.

Step 402: The IAB node determines the mobility state of the IAB node. Optionally, the MT in the IAB node may determine the mobility state of the IAB node.

Optionally, the first information includes the first speed state parameter. The IAB node determines the mobility state of the IAB node based on the first speed state parameter in the first information. Alternatively, the first speed state parameter in the IAB node is pre-configured by the OAM, and the IAB node determines the mobility state of the IAB node based on the pre-configured first speed state parameter.

Optionally, that the IAB node determines the mobility state of the IAB node based on the first speed state parameter may specifically include the following implementation 1 and/or implementation 2:
Implementation 1: When the IAB node is in inactive (inactive) state or idle (idle) state, the IAB node obtains a record of performing cell reselection by the IAB node, and determines the mobility state of the IAB node based on the record of performing cell reselection by the IAB node and the first speed state parameter. Optionally, the record of performing cell reselection by the IAB node includes a quantity of times of cell reselection performed by the IAB node. It may be understood that, in the implementation 1, after the IAB node is powered on and before the IAB node accesses a network, because a moving speed of the IAB node is fast, cell reselection is performed for a plurality of times in a short period of time. The IAB node may obtain the record of performing cell reselection by the IAB node, to determine the mobility state of the IAB node.
Implementation 2: When the IAB node is in connected (connected) state, the IAB node obtains a record of performing cell handover by the IAB node, and determines the mobility state of the IAB node based on the record of performing cell handover by the IAB node and the first speed state parameter. Optionally, the record of performing cell handover by the IAB node includes a quantity of times of cell handover performed by the IAB node, duration in which the IAB node stays in each cell, and the like.

For example, the IAB node may have a plurality of mobility states, and each mobility state is corresponding to a value interval. For example, the IAB node is in inactive state or idle state. The mobility state of the IAB node includes normal (normal), medium (medium), and high (high), where normal is corresponding to an interval 1 of the quantity of times of reselection, medium is corresponding to an interval 2 of the quantity of times of reselection, and high is corresponding to an interval 3 of the quantity of times of reselection. When determining that the quantity of times of cell reselection performed by the IAB node is in the interval 2 of the quantity of times of reselection, the IAB node determines that the mobility state of the IAB node is medium.

Step 403: The IAB node sends the mobility state of the IAB node to the donor node. Correspondingly, the donor node receives the mobility state from the IAB node.

Optionally, the MT in the IAB node sends the mobility state of the IAB node to the CU in the donor node. Correspondingly, the CU in the donor node receives the mobility state from the MT in the IAB node. When facing the donor node, the IAB node may serve as an MT. For example, the IAB node sends UE assistance information (UE assistance information) to the donor node. The UE assistance information includes the mobility state of the IAB node.

The IAB node may send the mobility state of the IAB node to the donor node based on a field in the first information. For details, refer to the following example 1 to example 3:
Example 1: The first information includes the first report indication. The IAB node sends the mobility state of the IAB node to the donor node based on the first report indication after the IAB node determines the mobility state of the IAB node.
Example 2: The first information includes the first capability information. The IAB node determines, based on the first capability information, that the donor node has the capability of providing a service for the mobile IAB node and the non-mobile IAB node. The IAB node sends the mobility state of the IAB node to the donor node after determining the mobility state of the IAB node.
Example 3: The first information includes the second capability information. The IAB node determines, based on the second capability information, that the donor node has the capability of providing a service for the mobile IAB node. The IAB node sends the mobility state of the IAB node to the donor node after determining the mobility state of the IAB node.

It should be supplemented that the mobile IAB node may have two working modes: a mobile mode and a static mode.

For example, when the IAB node is in inactive state or idle state, if the record of performing cell reselection by the IAB node indicates that the IAB node does not perform cell reselection within a preset time period, the IAB node may determine that the working mode of the IAB node is the static mode; or if the record of performing cell reselection by the IAB node indicates that the IAB node performs cell reselection within a preset time period, the IAB node may determine that the working mode of the IAB node is the mobile mode. Further, the IAB node determines, based on the record of cell reselection and the first speed state parameter, that the mobility state of the IAB node may be specifically normal, medium, or high.

For another example, when the IAB node is in connected state, if the record of performing cell handover by the IAB node indicates that the IAB node does not perform cell handover within a preset time period, the IAB node may determine that the working mode of the IAB node is the static mode; or if the record of performing cell handover by the IAB node indicates that the IAB node performs cell handover within a preset time period, the IAB node may determine that the working mode of the IAB node is the mobile mode. Further, the IAB node may determine, based on the record of cell handover and the first speed state parameter, that the mobility state of the IAB node may be specifically normal, medium, or high.

Further, the IAB node may further send the working mode of the IAB node to the donor node. The working mode may be specifically the mobile mode or the static mode.

Step 404: The donor node may not only obtain the mobility state of the IAB node, but also determine, based on the mobility state of the IAB node, that the IAB sending the mobility state is a mobile IAB (that is, identify the mobile IAB). Optionally, the CU in the donor node identifies the mobile IAB.

Optionally, the mobile IAB identified by the donor node may specifically move with a vehicle. In other words, the mobile IAB identified by the donor node is an in-vehicle IAB.

In the foregoing technical solution, the donor node indicates the IAB node to determine the mobility state of the IAB node, and report the mobility state of the IAB node to the donor node, so that the donor node can identify, based on the mobility state of the IAB node, whether the IAB node is a mobile IAB node. Further, the donor node may determine whether the donor node supports the mobile IAB node, or determine, for the mobile IAB node, another donor node that can support the mobile IAB node, to improve a success rate of requesting, by the mobile IAB node, to access a donor node, and avoid a case in which the donor node rejects the mobile IAB node when the mobile IAB node requests to access the donor node, and consequently the mobile IAB node cannot provide a service for a UE, that is, the UE cannot successfully access a network, and network performance of the UE is affected.

In addition, the IAB node may migrate between donor nodes in a moving process. A donor node before the migration may be referred to as a source donor node, and a donor node after the migration may be referred to as a target donor node. In other words, the IAB node migrates from an area managed by the source donor node to an area managed by another donor node (namely, the target donor node). After step 401 to step 404, when the source donor node determines that the IAB node migrates from the area managed by the source donor node to the area managed by the target donor node, the source donor node sends the mobility state of the IAB node to the target donor node.

In a possible example, the mobility state of the IAB node may be carried in a handover request sent by the source donor node to the target donor node. Correspondingly, the target donor node receives the handover request, and obtains the mobility state of the IAB node from the handover request. The target donor node determines whether the target donor node has a capability of supporting access of the IAB node, to obtain a determining result. The target donor node sends a handover response to the source donor node based on the determining result.

Optionally, a CU in the source donor node sends the mobility state of the IAB node to a CU in the target donor node. Correspondingly, the CU in the target donor node sends the handover response to the CU in the source donor node.

In the foregoing technical solution, the donor node may further send the mobility state of the IAB node to the another donor node, so that the another donor node determines whether the another donor node can support the mobile IAB node, and further determines whether the another donor node can support access of the mobile IAB node. This avoids a case in which the mobile IAB node is rejected when the mobile IAB node requests access, and consequently the mobile IAB node cannot provide a relay service for the UE, resulting in interruption of a service of the UE.

After identifying the mobile IAB node, the donor node may further determine whether the UE moves together with the mobile IAB node. It is noted in advance that, based on different migration modes of the mobile IAB node, implementations of determining, by the donor node, whether the UE moves together with the mobile IAB node are different.

When the migration mode of the IAB is full migration (full migration), a cell served by the IAB node changes as the IAB node moves. Specifically, a cell served by an IAB-DU changes as the IAB node moves.

FIG. 5 is a schematic flowchart of a second communication method according to an example of this application. The communication method is used by a donor node to determine, when a migration mode of an IAB is full migration, whether a UE moves together with the mobile IAB.

Step 501: The donor node sends second information to the UE. Correspondingly, the UE receives the second information from the donor node. The second information is used for the UE to send a mobility state of the UE to the donor node.

Optionally, the donor node sends the second information to the UE via the IAB. Optionally, the donor node may send the second information to the UE through unicast or broadcast. For example, the donor node sends a SIB 2 to the UE. The SIB 2 includes the second information. For another example, the donor node sends RRC to the UE. The RRC includes the second information. Optionally, the second information may include the following (a) and/or (b):
(a) Second report indication: The second report indication indicates the UE to send the mobility state of the UE to the donor node, and may be specifically represented as a mobility state report (mobility state report) indication.
(b) Second speed state parameter: The second speed state parameter is used by the UE to determine the mobility state of the UE, and may be specifically represented as speed State Reselection Pars.

That the UE sends the mobility state of the UE to the donor node based on the second information may be divided into the following step 502 and step 503.

Step 502: The UE determines the mobility state of the UE.

Optionally, the second information includes the second speed state parameter. The UE determines the mobility state of the UE based on the second speed state parameter in the second information. Alternatively, the second speed state parameter in the UE is pre-configured by an OAM, and the UE determines the mobility state of the UE based on the pre-configured second speed state parameter.

Optionally, that the UE determines the mobility state of the UE based on the second speed state parameter may specifically include the following implementation a and/or implementation b:
Implementation a: When the UE is in inactive state or idle state, the UE obtains a record of performing cell reselection by the UE, and determines the mobility state of the UE based on the record of performing cell reselection by the UE and the second speed state parameter. Optionally, the record of performing cell reselection by the UE includes a quantity of times of cell reselection performed by the UE.
Implementation b: When the UE is in connected state, the UE obtains a record of performing cell handover by the UE, and determines the mobility state of the UE based on the record of performing cell handover by the UE and the second speed state parameter. Optionally, the record of performing cell handover by the UE includes a quantity of times of cell handover performed by the UE, duration in which the UE stays in each cell, and the like.

For example, the UE may have a plurality of mobility states, and each mobility state is corresponding to a value interval. For example, the UE is in inactive state or idle state. The mobility state of the UE includes normal, medium, and high, where normal is corresponding to an interval a of the quantity of times of reselection, medium is corresponding to an interval b of the quantity of times of reselection, and high is corresponding to an interval c of the quantity of times of reselection. When determining that the quantity of times of cell reselection performed by the UE is in the interval b of the quantity of times of reselection, the UE determines that the mobility state of the UE is medium.

Step 503: The UE sends the mobility state of the UE to the donor node. Correspondingly, the donor node receives the mobility state from the UE. Optionally, the UE sends the second information to the donor node via the IAB node.

For example, the second information further includes the second report indication. The UE sends the mobility state of the UE to the donor node based on the second report indication after determining the mobility state of the UE.

Step 504: The donor node determines, based on the mobility state of the UE, whether the UE and the IAB node move together. Optionally, a CU in the donor node determines, based on the mobility state of the UE, whether the UE and the IAB node move together.

In a possible implementation, if determining, based on the mobility state of the UE, that the UE is moving, the donor node determines that the UE and the IAB node move together. Optionally, if determining, based on the mobility state of the UE, that a quantity of times of cell handover (or a quantity of times of cell reselection) performed by the UE within a preset time period exceeds a quantity threshold of times, the donor node determines that the UE and the IAB node move together. In addition, if determining, based on the mobility state of the UE, that the UE is still, the donor node determines that the UE and the IAB node do not move together.

In another possible implementation, if determining, based on the mobility state of the UE and a mobility state of the IAB node, that the mobility state of the UE is the same as the mobility state of the IAB node, the donor node determines that the UE and the IAB node move together; or if determining that the mobility state of the UE is different from the mobility state of the IAB node, the donor node determines that the UE and the IAB node do not move together. This manner helps improve determining accuracy.

In addition, the donor node may further obtain historical information of the UE and historical information of the mobile IAB. The historical information of the UE includes a historical cell list of the UE, and the historical cell list of the UE includes identifiers of a plurality of cells that provide services for the UE, duration in which the plurality of cells respectively provide the services for the UE, and identifiers (or base station identifiers or gNB IDs) of donor nodes corresponding to the plurality of cells. The historical information of the mobile IAB includes a historical cell list of the mobile IAB, and the historical cell list of the mobile IAB includes identifiers of a plurality of cells that provide services for the mobile IAB, duration in which the plurality of cells respectively provide the services for the mobile IAB, and identifiers (or base station identifiers or gNB IDs) of donor nodes corresponding to the plurality of cells. If determining that both the identifier of the donor node and the duration corresponding to the donor node identifier in the historical information of the UE are the same as those in the historical information of the mobile IAB, the donor node determines that the UE and the mobile IAB move together; or if determining that both the identifier of the donor node and the duration corresponding to the donor node identifier in the historical information of the UE are not completely the same as those in the historical information of the mobile IAB, the donor node determines that the UE and the mobile IAB do not move together.

Further, the historical information of the UE may be specifically actively reported by the UE to the donor node. The historical information of the UE may include a cell on which the UE camps when the UE is in connected state, a cell on which the UE camps when the UE is in inactive state, and a cell on which the UE camps when the UE is in idle state. Alternatively, the historical information of the UE may be sent by a source donor node to a target donor node in a process in which the UE performs handover between the donor nodes. The historical information of the UE may include a cell (not a target cell of the handover) that provides a service for the UE when the UE is in connected state. Similarly, the historical information of the mobile IAB may also be specifically actively reported by the mobile IAB to the donor node, or sent by the source donor node to the target donor node. For specific descriptions, refer to descriptions in the historical information of the UE. Certainly, for the donor node (or the target donor node), the historical information of the mobile IAB may also be considered as the historical information of the UE.

In addition, the donor node (or the target donor node) may further determine, based on the historical information of the mobile IAB, that the IAB sending the historical message is the mobile IAB. Specifically, when determining, based on the historical information of the mobile IAB, that the IAB passes through a plurality of cells within a preset time period, the donor node (or the target donor node) determines that the IAB is the mobile IAB. Similarly, the donor node (or the target donor node) may further determine, based on the historical information of the UE, that the UE sending the historical message is a mobile UE (or the UE moving together with the mobile IAB). Specifically, when determining, based on the historical information of the mobile UE, that the UE passes through a plurality of cells within the preset time period, the donor node (or the target donor node) determines that the UE is the mobile UE.

In the foregoing technical solution, the donor node determines whether the UE and the IAB node move together, to determine how to provide a service for the UE. This improves a success rate of accessing a network by the UE, that is, improves network performance of the UE.

When the migration mode of the IAB is partial migration (partial migration), a cell served by the IAB node does not change as the IAB node moves. Specifically, a cell served by an IAB-DU does not change as the IAB node moves.

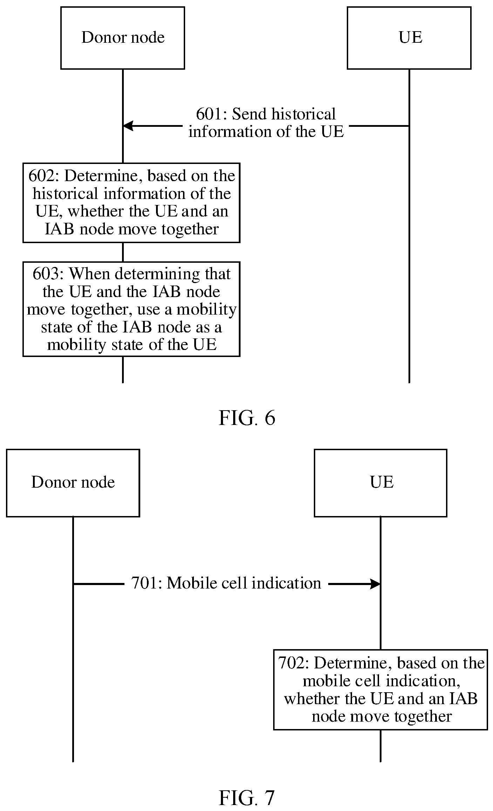

FIG. 6 is a schematic flowchart of a third communication method according to an example of this application. The communication method is used by a donor node to determine, when a migration mode of an IAB is partial migration, whether a UE moves together with the mobile IAB.

Step 601: The UE sends historical information of the UE to the donor node. Correspondingly, the donor node receives the historical information from the UE. For descriptions of the historical information of the UE, refer to the descriptions in step 504.

Optionally, the UE sends the historical information of the UE to the donor node via the IAB node.

Step 602: The donor node determines, based on the historical information of the UE, whether the UE and the IAB node move together.

Optionally, when determining that duration in which the UE stays in a last cell in a historical cell list of the UE is greater than a duration threshold, the donor node determines that the UE and the IAB node move together; or when determining that duration in which the UE stays in a last cell in a historical cell list of the UE is less than or equal to a duration threshold, the donor node determines that the UE and the IAB node do not move together.

Optionally, the donor node determines that the UE and the IAB node move together, for example, may determine that the UE and the IAB node move together with a vehicle, that is, the donor node identifies the in-vehicle IAB and the in-vehicle UE.

Step 603: When determining that the UE and the IAB node move together, the donor node uses a mobility state of the IAB node as a mobility state of the UE.

For example, if the mobility state of the IAB node is normal, the mobility state of the UE is also normal.

In the foregoing technical solution, the donor node determines whether the UE and the IAB node move together, to determine how to provide a service for the UE. This improves a success rate of accessing a network by the UE, that is, improves network performance of the UE.

In addition, in this application, not only the donor node may determine whether the UE moves together with the IAB node, but also the UE may determine whether the UE moves together with the IAB node. For example, in an in-vehicle scenario, the UE may determine whether the UE and the IAB node move together with the vehicle.

FIG. 7 is a schematic flowchart of a fourth communication method according to an example of this application. The communication method is specifically used by a UE to determine whether the UE moves together with an IAB node. It may be understood that, unless otherwise specified, the IAB node is an IAB node currently accessed by the UE.

Step 701: A donor node sends a mobile cell indication (English: mobile cell indication) to the UE. Correspondingly, the UE receives the mobile cell indication from the donor node. The mobile cell indication indicates that a cell in which the UE is located is a mobile cell.

Optionally, the donor node sends the mobile cell indication to the UE via the IAB node. In a specific example, a CU in the donor node broadcasts the mobile cell indication. Correspondingly, a DU in an IAB node in the cell receives the mobile cell indication broadcast by the CU in the donor node. Further, the DU in the IAB node broadcasts the mobile cell indication. Correspondingly, a UE in the cell receives the mobile cell indication broadcast by the DU in the IAB node.

Step 702: The UE determines, based on the mobile cell indication, whether the UE and an IAB node move together.

In this application, that the UE and the IAB node move together may be specifically that the UE and an IAB node accessed by the UE move together. In other words, the IAB node accessed by the UE within a preset time period does not change.

In a possible implementation, after determining, based on the mobile cell indication, that a cell in which the UE is currently located is a mobile cell, the UE needs to further determine whether the IAB node accessed by the UE changes.

Specifically, the UE determines whether the IAB node accessed by the UE changes within the preset time period, to determine whether the UE and the IAB node move together. In a specific implementation, the UE may start a timer of preset duration. In a process (namely, the preset time period) from starting to ending of the timer, if determining that the IAB node accessed by the UE does not change within the preset time period, the UE determines that the UE and the IAB node move together; or if determining that the IAB node accessed by the UE changes within the preset time period (for example, the UE accesses a new IAB node), the UE determines that the UE and the IAB node do not move together. In addition, in a case in which the UE accesses the new IAB, the UE may start a timer again, and further determine whether the UE moves together with the newly accessed IAB node. Optionally, duration of the timer is the same as or different from the duration of the previous timer.

Optionally, the preset time period may be determined by the UE based on time information and a current moment. The time information may be sent by the donor node to the UE. The time information may indicate the preset duration of the preset time period, and may be represented as on board timer configuration in English.

For example, the time information may be determined by the donor node based on a mobility state of the IAB node. For example, when the mobility state is high, the preset duration of the preset time period indicated by the time information is first duration; or when the mobility state is normal, the preset duration of the preset time period indicated by the time information is second duration. The first duration is less than the second duration. When the UE accesses the new IAB node, the donor node may further determine new time information based on a mobility state of the newly accessed IAB node, and send the new time information to the UE.

In addition, the UE may alternatively receive the time information from the IAB node accessed by the UE. For example, the time information may be determined by the IAB node based on the mobility state of the IAB node. A specific implementation is similar to a manner in which the donor node determines the time information. Details are not described again.

The following provides examples of three implementations in which the UE determines whether the UE and the IAB node move together:
Implementation 1: A cell broadcasts a cell identity of the cell. The UE monitors a cell identity broadcast by the cell in which the UE is located; and when determining that the cell identities remain unchanged within the preset time period, determines that the UE and the IAB node move together; or when determining that the cell identities change within the preset time period, determines that the UE and the IAB node do not move together. It may also be understood that, when determining that duration (camping duration) in which the UE camps on the current cell is greater than the preset duration, the UE determines that the UE and the IAB node move together; or when determining that camping duration is not greater than the preset duration, the UE determines that the UE and the IAB node do not move together.
Implementation 2: A cell broadcasts an identifier of an IAB node to which the cell belongs. The UE monitors an identifier that is of the IAB node and that is broadcast by the cell in which the UE is located; and when determining that the identifiers of the IAB node remain unchanged within the preset time period, determines that the UE and the IAB node move together; or when determining that the identifiers of the IAB node change within the preset time period, determines that the UE and the IAB node do not move together.
Implementation 3: Because there is a specific air interface propagation delay between the UE and a base station, a time synchronization point of the UE is inconsistent with a time synchronization point of the base station. To eliminate a time synchronization deviation between the UE and the base station, the UE needs to perform time adjustment before transmitting a signal, and transmit the signal based on the time synchronization point of the base station. A timing advance (timing advance, TA) is used to ensure that the signal of the UE can accurately fall within a receive time window of the base station. It may also be understood that a change of the TA may indicate a change of an IAB accessed by the UE. Specifically, when determining that the TA remains unchanged within the preset time period, the UE determines that the UE and the IAB node move together; or when determining that the TA changes within the preset time period, the UE determines that the UE and the IAB node do not move together.

In the foregoing technical solution, the UE determines whether the UE and the IAB node move together. When determining that the UE and the IAB node move together, the UE may preferentially select the mobile cell to serve the UE, to ensure service experience of the UE.

This application further provides a fifth communication method. The communication method is specifically a method for adjusting a physical cell identifier (physical cell index, PCI) of a cell. The PCI is an important parameter of a new radio (new radio, NR) cell. Each NR cell is corresponding to one PCI, and the PCI may be used on a radio side to distinguish between different cells. The method may be used to resolve a PCI conflict problem in a mobility scenario of an IAB, to improve communication quality.

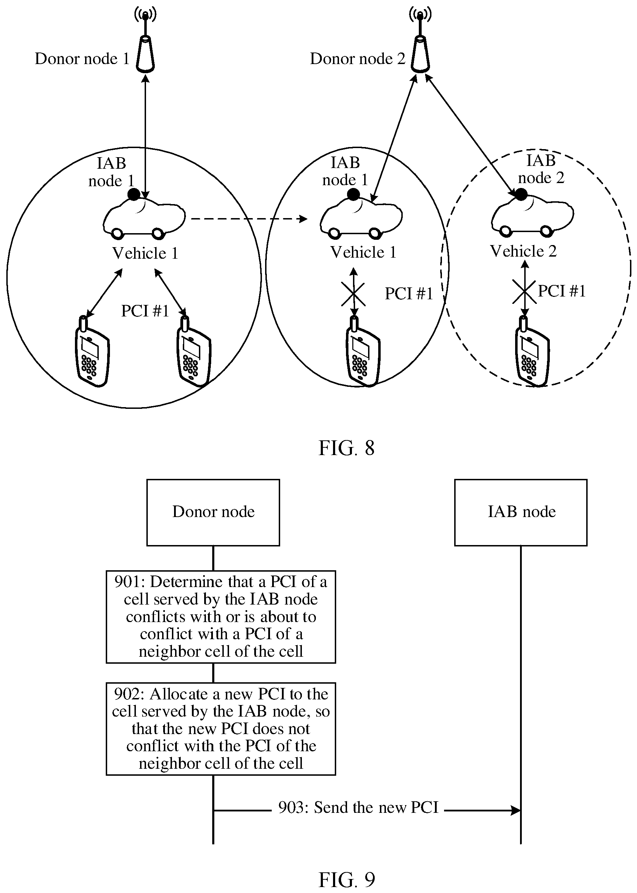

FIG. 8 is an example of a diagram of another scenario in which a mobile IAB and a UE are deployed in a vehicle. A PCI conflict is explained with reference to FIG. 8. A vehicle 1 served by a donor node (or referred to as a base station gNB) 1 receives a service, and the vehicle 1 is equipped with an IAB node 1. A cell identity configured for a subordinate of the IAB node 1 is a PCI #1. In a moving process, the vehicle 1 moves to a donor node 2 to receive a service, and the donor node 2 further provides a service for a vehicle 2. If a subordinate of an IAB node 2 on the vehicle 2 is also configured with the cell identity PCI #1, the PCIs of the two cells conflict with each other, affecting communication quality.

FIG. 9 shows an example of a schematic flowchart of the fifth communication method.

Step 901: A donor node determines that a PCI of a cell served by an IAB node conflicts with or is about to conflict with a PCI of a neighbor cell of the cell.

Specifically, a CU in the donor node determines that the PCI of the cell served by the IAB node conflicts with or is about to conflict with the PCI of the neighbor cell of the cell.

The donor node (or a base station or a gNB) may automatically configure and maintain a neighbor cell in a next generation radio access network (next generation radio access network, NG-RAN) system and a neighbor cell between the NG-RAN and an evolution UMTS terrestrial radio access network (evolution UMTS terrestrial radio access network, E-UTRAN) system by using an automatic neighbor relation (automatic neighbor relation, ANR) technology. Specifically, the donor node may maintain two tables, a neighboring relation table (neighboring relation table, NRT) and a neighboring cell list (neighboring cell list, NCL), by using the ANR technology. The NRT is configured at a cell level and may be used to record information about all neighbor cells of the cell. The NCL is configured at a base station level and may be used to record information about neighbor cells of all cells served by the base station, and these neighbor cells are cells not served by the base station. The information about the neighbor cell includes a PCI of the neighbor cell.

It may be understood that the donor node may determine, based on the NRT and the NCL, whether the PCI of the cell served by the IAB node conflicts with or is about to conflict with a PCI of another cell.

For example, when determining that the PCI of the cell served by the IAB node is the same as the PCI of the neighbor cell of the cell, the donor node determines that the PCI of the cell served by the IAB node conflicts with the PCI of the neighbor cell of the cell. For example, a PCI of a cell 1 served by the IAB node is a PCI #1, neighbor cells of the cell 1 include a cell 2 to a cell 10, and a PCI of the cell 2 is also the PCI #1. In this case, the donor node determines that the PCI of the cell 1 conflicts with the PCI of the neighbor cell (namely, the cell 2).

For another example, when predicting, based on a mobility state of the IAB node, that the PCI of the cell served by the IAB node is about to be the same as the PCI of the neighbor cell of the cell, the donor node determines that the PCI of the cell served by the IAB node is about to conflict with the PCI of the neighbor cell of the cell. For example, a PCI of a cell 1 served by the IAB node is a PCI #1, neighbor cells of the cell 1 include a cell 2 to a cell 10, PCIs of the current cell 2 to cell 10 are all different from the PCI #1, but the donor node predicts, based on the mobility state of the IAB node, that a cell 11 is to become a neighbor cell of the cell 1, and a PCI of the cell 11 is the PCI #1. In this case, the donor node predicts that the PCI of the cell 1 is about to conflict with the PCI of the cell 11.

Step 902: The donor node allocates a new PCI to the cell served by the IAB node, so that the new PCI does not conflict with the PCI of the neighbor cell of the cell.

Specifically, the CU in the donor node allocates the new PCI to the cell served by the IAB node, so that the new PCI does not conflict with the PCI of the neighbor cell of the cell.

Specifically, the donor node may allocate, based on the NRT and the NCL, the new PCI to the cell served by the IAB node. For example, the donor node allocates, based on the NRT and the NCL, a PCI different from that of the neighbor cell of the cell served by the IAB node to the cell served by the IAB node. For another example, the donor node allocates, based on the NRT and the NCL, another PCI other than the NRT and the NCL to the cell served by the IAB node, where the another PCI is different from the PCI of the neighbor cell of the cell.

Step 903: The donor node sends the allocated new PCI to the IAB node.

Specifically, the CU in the donor node sends the allocated new PCI to the IAB node.

For example, the donor node sends new PCI configuration information (new PCI configuration in English) to the IAB node. The new PCI configuration information includes the new PCI.

In this way, the cell served by the IAB node may provide a service for the UE based on the new PCI, to improve communication quality.

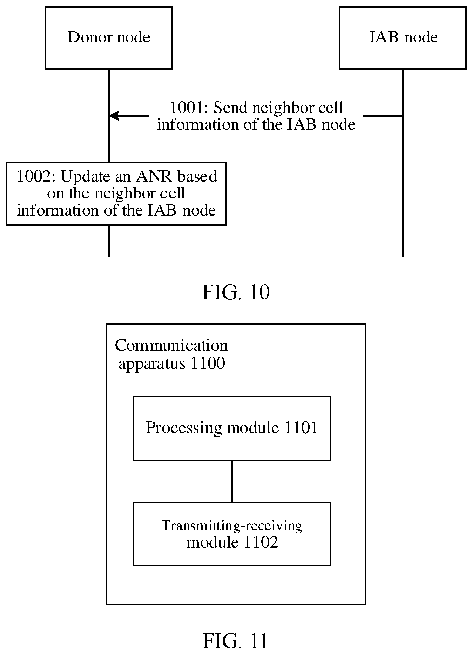

This application further provides a sixth communication method. The communication method is specifically a method in which a donor node updates neighbor cell information of the donor node based on measurement and reporting of an IAB node (or a UE). The IAB node is used as an example below to describe the sixth communication method. For a schematic flowchart of the communication method, refer to FIG. 10.

It should be supplemented that the donor node may alternatively update the neighbor cell information of the donor node based on the measurement and reporting of the UE. The "IAB node" in the embodiment related to FIG. 10 may be replaced with "UE" for understanding.

Step 1001: The IAB node sends neighbor cell information of the IAB node to the donor node. Correspondingly, the donor node receives the neighbor cell information from the IAB node.

Specifically, an MT in the IAB node sends the neighbor cell information of the IAB node to a CU in the donor node.

The neighbor cell information of the IAB node includes cell information of one or more cells that is measured and reported by the IAB node.

For example, information about the one or more cells may be cell information of one or more specific cells that is obtained by the IAB node by monitoring and measuring a broadcast signal of the one or more specific cells based on an indication of the donor node.

The specific cell may be specifically a surrounding cell that is of the IAB node and that is not maintained by the donor node based on the ANR. In a specific implementation, the IAB node monitors and measures a broadcast signal of a surrounding cell of the IAB node, and reports a PCI of the surrounding cell of the IAB node to the donor node. Correspondingly, the donor node determines that the surrounding cell of the IAB node includes a cell (namely, a specific cell) that is not maintained based on the ANR. Then, the donor node indicates a PCI of the specific cell to the IAB node. The IAB node measures and reports cell information of the specific cell based on the PCI of the specific cell.

For example, the donor node maintains cell information of a neighbor cell 1 to a neighbor cell 10 based on the ANR. When the IAB node reports PCIs of the neighbor cell 1 to a neighbor cell 12 to the donor node, the donor node may determine that cell information of the neighbor cell 11 and the neighbor cell 12 is not maintained based on the ANR, and indicate the PCIs of the neighbor cell 11 and the neighbor cell 12 to the IAB node. Correspondingly, the IAB node measures and reports the cell information of the neighbor cell 11 and the neighbor cell 12.

For another example, information about the one or more cells may be cell information that is of a surrounding cell of the IAB node and that is obtained by the IAB node by monitoring and measuring a broadcast signal of the surrounding cell of the IAB node.

Further, the IAB node monitors a broadcast signal of one or more cells, and determines whether each cell is a mobile cell, to send the neighbor cell information of the IAB node to the donor node.

One cell is used as an example below for description.

In a possible implementation, when determining that the cell is a mobile cell, the IAB node sends cell information of the cell to the donor node.

Example 1: A broadcast signal of a neighbor cell includes a cell identity (for example, a PCI) of the cell and a mobility indication, where the mobility indication indicates whether the cell is a mobile cell. Subsequently, the IAB node generates cell information of the cell after obtaining a broadcast signal of the cell through monitoring, where the cell information of the cell includes the cell identity and the mobility indication.

Example 2: When the cell is a mobile cell, a broadcast signal of the cell includes a mobility indication; or when the cell is not a mobile cell, a broadcast signal of the cell does not include a mobility indication. It may be understood that the mobility indication indicates that the cell is a mobile cell. Correspondingly, after the IAB node obtains a broadcast signal of a cell through monitoring, if a cell identity and a mobility indication are obtained from the broadcast signal, generated cell information also includes the cell identity and the mobility indication; or if a cell identity is obtained from the broadcast signal (that is, no mobility indication is obtained), generated cell information includes the cell identity (but does not include a mobility indication).

Certainly, there may be other indication manners. Examples are not provided one by one in this application.

Step 1002: The donor node updates the ANR based on the neighbor cell information of the IAB node. In this application, updating the ANR is equivalent to updating two tables (that is, an NRT and an NCL) maintained based on the ANR.

Specifically, the CU in the donor node updates the ANR based on the neighbor cell information of the IAB node.

Further, the donor node may determine, based on the neighbor cell information of the IAB node, whether to maintain, in the NRT or the NCL, cell information that is of one or more neighbor cells and that is not maintained in the NRT or the NCL. It may be understood that, for the donor node, the surrounding cell of the IAB node is a neighbor cell of the donor node, that is, the neighbor cell information reported by the IAB node includes cell information of the neighbor cell of the donor node. Cell information of one neighbor cell is used as an example below.

In a possible implementation, if the donor node determines, based on the cell information of the neighbor cell, that the neighbor cell is a mobile cell, the donor node may not maintain the cell information of the neighbor cell in the NRT or the NCL; or if the donor node determines, based on the cell information of the neighbor cell, that the neighbor cell is a fixed (non-mobile) cell, the donor node may maintain the cell information of the neighbor cell in the NRT or the NCL. In this way, a case in which the neighbor cell of the IAB node changes at a high frequency, that is, the donor node frequently updates the ANR, due to mobility of the neighbor cell is avoided. This helps reduce unnecessary overheads.

In another possible implementation, if the donor node determines, based on the cell information of the neighbor cell, that the neighbor cell is a mobile cell, the donor node may maintain the cell information of the neighbor cell in the NRT or the NCL, that is, the donor node still marks the neighbor cell as the mobile cell; or if the donor node determines, based on the cell information of the neighbor cell, that the neighbor cell is a fixed cell, the donor node may maintain the cell information of the neighbor cell in the NRT or the NCL. In this way, the donor node may accurately predict or determine, based on a feature of the mobile cell, whether the PCI of the cell served by the IAB node conflicts with or is about to conflict with the PCI of the another cell (namely, the neighbor cell), to ensure communication stability.

The donor node may determine, based on the cell information of the neighbor cell, whether the neighbor cell is a mobile cell. Based on the example 1, the donor node obtains the mobility indication from the cell information of the neighbor cell, and determines, based on the mobility indication, that the neighbor cell is a mobile cell. Based on the example 2, if the donor node obtains the mobility indication from the cell information of the neighbor cell, the donor node may determine that the neighbor cell is a mobile cell; or if the donor node does not obtain the mobility indication from the cell information of the neighbor cell, the donor node may determine that the neighbor cell is a fixed cell.

It should be supplemented that, the foregoing step 1001 may alternatively be that the IAB node filters cell information of a mobile neighbor cell, and the IAB node sends the cell information of the fixed neighbor cell to the donor node. Specifically, when the IAB node determines that the neighbor cell is a fixed cell, the IAB node sends the cell information of the neighbor cell to the donor node; or when the IAB node determines that the neighbor cell is a mobile cell, the IAB node does not send the cell information of the neighbor cell to the donor node. It may be understood that, in this implementation, the neighbor cell information of the IAB node that is sent by the IAB node to the donor node does not include cell information of a mobile cell. This helps prevent the donor node from frequently updating the ANR based on the neighbor cell information of the IAB node, to reduce unnecessary overheads.

Embodiments described in this specification may be independent solutions, or may be combined based on internal logic. All of these solutions fall within the protection scope of this application.

It may be understood that, in the foregoing method embodiments, the method and the operation implemented by the donor node may also be implemented by a component (for example, a chip or a circuit) of the donor node, the method and the operation implemented by the IAB node may also be implemented by a component (for example, a chip or a circuit) of the IAB node, and the method and the operation implemented by the UE may also be implemented by a component (for example, a chip or a circuit) of the UE.

In the foregoing embodiments provided in this application, the method provided in embodiments of this application is described from a perspective of interaction between the devices. To implement functions in the method provided in embodiments of this application, the donor node, the IAB node, and the UE each may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

In embodiments of this application, module division is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

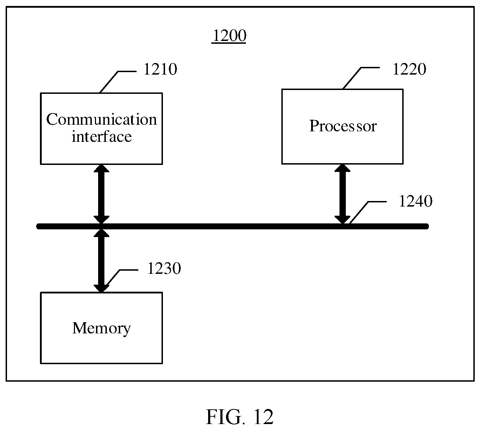

Based on the foregoing content and a same concept, FIG. 11 and FIG. 12 each are a diagram of a possible structure of a communication apparatus according to this application. These communication apparatuses may be configured to implement functions of the donor node, the IAB node, or the UE in the foregoing method embodiments, and therefore can also implement beneficial effects of the foregoing method embodiments.

In this application, the communication apparatus may be the donor node shown in FIG. 1, or may be the IAB node shown in FIG. 1, or may be the UE shown in FIG. 1. Certainly, the communication apparatus may alternatively be a module (for example, a chip) used in the donor node, the IAB node, or the UE.

As shown in FIG. 11, the communication apparatus 1100 includes a processing module 1101 and a transmitting-receiving module 1102.

When the communication apparatus 1100 is configured to implement the functions of the donor node in the method embodiments related to FIG. 4 and FIG. 5, the transmitting-receiving module 1102 is configured to receive and send information. The processing module 1101 is configured to control the transmitting-receiving module 1102 to send first information to an IAB node. The first information indicates that the IAB node is to send a mobility state of the IAB node to the donor node. The processing module 1101 is further configured to control the transmitting-receiving module 1102 to receive the mobility state from the IAB node.

In a possible implementation, when the IAB node is in inactive state or idle state, the mobility state of the IAB node is determined by the IAB node based on a first speed state parameter and a record of performing cell reselection by the IAB node; and/or when the IAB node is in connected state, the mobility state of the IAB node is determined by the IAB node based on a first speed state parameter and a record of performing cell handover by the IAB node. The first speed state parameter is used by the IAB node to determine the mobility state of the IAB node.

In a possible implementation, the first information includes one or more of the following: first capability information, indicating that the donor node has a capability of providing a service for a mobile IAB node and a non-mobile IAB node; second capability information, indicating that the donor node has a capability of providing a service for a mobile IAB node; a first report indication, indicating that the IAB node is to send the mobility state of the IAB node to the donor node; or the first speed state parameter, used by the IAB node to determine the mobility state of the IAB node.

In a possible implementation, the processing module 1101 is further configured to: when determining that the IAB node migrates from being managed by the donor node to being managed by another donor node, control the transmitting-receiving module 1102 to send a handover request to the another donor node. The handover request includes the mobility state of the IAB node.

In a possible implementation, the processing module 1101 is further configured to: control the transmitting-receiving module 1102 to send second information to a UE, where the second information is used by the UE to send a mobility state of the UE to the donor node; receive the mobility state from the UE; and determine, based on the mobility state of the UE, whether the UE and the IAB node move together.

In a possible implementation, when the UE is in inactive state or idle state, the mobility state of the UE is determined by the UE based on a second speed state parameter and a record of performing cell reselection by the UE; and/or when the UE is in connected state, the mobility state of the UE is determined by the UE based on a second speed state parameter and a record of performing cell handover by the UE. The second speed state parameter is used by the UE to determine the mobility state of the UE.

In a possible implementation, the second information includes one or more of the following: a second report indication, indicating the UE to send the mobility state of the UE to the donor node; or the second speed state parameter, used by the UE to determine the mobility state of the UE.

In a possible implementation, when determining, based on the mobility state of the UE, whether the UE and the IAB node move together, the processing module 1101 is specifically configured to: when determining that the mobility state of the UE is the same as the mobility state of the IAB node, determine that the UE and the IAB node move together.

When the communication apparatus 1100 is configured to implement the functions of the IAB node in the method embodiments related to FIG. 4 and FIG. 5, the transmitting-receiving module 1102 is configured to receive and send information. The processing module 1101 is configured to: control the transmitting-receiving module 1102 to receive first information from a donor node; and send a mobility state of the IAB node to the donor node based on the first information.

In a possible implementation, when the IAB node is in inactive state or idle state, the mobility state of the IAB node is determined by the IAB node based on a first speed state parameter and a record of performing cell reselection by the IAB node; and/or when the IAB node is in connected state, the mobility state of the IAB node is determined by the IAB node based on a first speed state parameter and a record of performing cell handover by the IAB node. The first speed state parameter is used by the IAB node to determine the mobility state of the IAB node.

In a possible implementation, the first information includes one or more of the following: first capability information, indicating that the donor node has a capability of providing a service for a mobile IAB node and a non-mobile IAB node; second capability information, indicating that the donor node has a capability of providing a service for a mobile IAB node; a first report indication, indicating that the IAB node is to send the mobility state of the IAB node to the donor node; or the first speed state parameter, used by the IAB node to determine the mobility state of the IAB node.

When the communication apparatus 1100 is configured to implement the functions of the UE in the method embodiments related to FIG. 4 and FIG. 5, the transmitting-receiving module 1102 is configured to receive and send information. The processing module 1101 is configured to: control the transmitting-receiving module 1102 to receive second information from a donor node; and send a mobility state of the UE to the donor node based on the second information.

In a possible implementation, when the UE is in inactive state or idle state, the mobility state of the UE is determined by the UE based on a second speed state parameter and a record of performing cell reselection by the UE; and/or when the UE is in connected state, the mobility state of the UE is determined by the UE based on a second speed state parameter and a record of performing cell handover by the UE. The second speed state parameter is used by the UE to determine the mobility state of the UE.

In a possible implementation, the second information includes one or more of the following: a second report indication, indicating the UE to send the mobility state of the UE to the donor node; or the second speed state parameter, used by the UE to determine the mobility state of the UE.

When the communication apparatus 1100 is configured to implement the functions of the donor node in the method embodiment related to FIG. 6, the transmitting-receiving module 1102 is configured to receive historical information from a UE. The processing module 1101 is configured to: determine, based on the historical information of the UE, whether the UE and an IAB node move together, and when determining that the UE and the IAB node move together, use a mobility state of the IAB node as a mobility state of the UE.

In a possible implementation, the processing module 1101 is specifically configured to: when determining that duration in which the UE stays in a last cell in a historical cell list of the UE is greater than a duration threshold, determine that the UE and the IAB node move together; or when determining that duration in which the UE stays in a last cell in a historical cell list of the UE is less than or equal to a duration threshold, determine that the UE and the IAB node do not move together.

When the communication apparatus 1100 is configured to implement the functions of the UE in the method embodiment related to FIG. 7, the transmitting-receiving module 1102 is configured to receive a mobile cell indication from a donor node. The mobile cell indication indicates that a cell in which the UE is located is a mobile cell. The processing module 1101 is configured to determine, based on the mobile cell indication, whether the UE and an IAB node move together.

In a possible implementation, the processing module 1101 is configured to: after determining, based on the mobile cell indication, that a cell in which the UE is currently located is a mobile cell, further determine whether the IAB node accessed by the UE changes.

In a possible implementation, the processing module 1101 is specifically configured to: if determining that the IAB node accessed by the processing module 1101 does not change within a preset time period, determine that the UE and the IAB node move together; or if determining that the IAB node accessed by the processing module 1101 changes within a preset time period, determine that the UE and the IAB node do not move together.

In a possible implementation, when determining whether the IAB node accessed by the UE changes, the processing module 1101 is specifically configured to: monitor, via the transmitting-receiving module 1102, a cell identity broadcast by the cell in which the UE is located; and when determining that the cell identity of the cell in which the UE is located remains unchanged within the preset time period, determine that the UE and the IAB node move together; or when determining that the cell identity of the cell in which the UE is located changes within the preset time period, determine that the UE and the IAB node do not move together.

In a possible implementation, when determining whether the IAB node accessed by the UE changes, the processing module 1101 is specifically configured to: monitor, via the transmitting-receiving module 1102, an identifier that is of the IAB node and that is broadcast by the cell in which the UE is located; and when determining that the identifier of the IAB node remains unchanged within the preset time period, determine that the UE and the IAB node move together; or when determining that the identifier of the IAB node changes within the preset time period, determine that the UE and the IAB node do not move together.

In a possible implementation, when determining whether the IAB node accessed by the UE changes, the processing module 1101 is specifically configured to: determine that the UE and the IAB node move together when determining that a TA remains unchanged within the preset time period; or determine that the UE and the IAB node do not move together when determining that a TA changes within the preset time period.

When the communication apparatus 1100 is configured to implement the functions of the donor node in the foregoing method embodiment related to FIG. 9, the processing module 1101 is configured to: when determining that a PCI of a cell covered by an IAB node conflicts with or is about to conflict with a PCI of a neighbor cell of the cell, allocate a new PCI to the cell served by the IAB node, so that the new PCI does not conflict with the PCI of the neighbor cell of the cell. The transmitting-receiving module 1102 is configured to send the new PCI to the IAB node.

In a possible implementation, when determining that the PCI of v cell served by the IAB node conflicts with or is about to conflict with the PCI of the neighbor cell of the cell, the processing module 1101 is specifically configured to determine, based on an NRT and an NCL, whether the PCI of the cell served by the IAB node conflicts with or is about to conflict with a PCI of another cell.

In a possible implementation, when allocating the new PCI to the cell served by the IAB node, the processing module 1101 is specifically configured to: allocate, based on the NRT and the NCL, the new PCI to the cell served by the IAB node.

When the communication apparatus 1100 is configured to implement the functions of the donor node in the method embodiment related to FIG. 10, the transmitting-receiving module 1102 is configured to receive neighbor cell information from an IAB node. The processing module 1101 is configured to update an ANR based on the neighbor cell information of the IAB node. The neighbor cell information includes cell information of each neighbor cell.

In a possible implementation, the neighbor cell information of the IAB node includes cell information of one or more cells that is measured and reported by the IAB node. For example, information about the one or more cells may be cell information of one or more specific cells that is obtained by the IAB node by monitoring and measuring a broadcast signal of the one or more specific cells based on an indication of the communication apparatus 1100. For the communication apparatus 1100, the specific cell is a neighbor cell of the communication apparatus 1100.

In a possible implementation, the cell information of the neighbor cell includes a cell identity and a mobility indication that are of the neighbor cell. The mobility indication indicates whether the neighbor cell is a mobile cell.

In a possible implementation, the processing module 1101 is configured to: if determining, based on the cell information of the neighbor cell, that the neighbor cell is a mobile cell, do not maintain the cell information of the neighbor cell in the NRT or the NCL; or if determining, based on the cell information of the neighbor cell, that the neighbor cell is a fixed cell, maintain the cell information of the neighbor cell in the NRT or the NCL.

In a possible implementation, the processing module 1101 is configured to: if determining, based on the cell information of the neighbor cell, that the neighbor cell is a mobile cell, maintain the cell information of the neighbor cell in the NRT or the NCL; or if determining, based on the cell information of the neighbor cell, that the neighbor cell is a fixed cell, do not maintain the cell information of the neighbor cell in the NRT or the NCL.

FIG. 12 shows an apparatus 1200 according to an embodiment of this application. The apparatus shown in FIG. 12 may be an implementation of a hardware circuit of the apparatus shown in FIG. 11. The apparatus is applicable to the flowcharts shown above, and performs functions of the donor node, the IAB node, or the UE in the foregoing method embodiments.

For ease of description, FIG. 12 shows only main components of the apparatus.

The apparatus 1200 shown in FIG. 12 includes a communication interface 1210, a processor 1220, and a memory 1230. The memory 1230 is configured to store program instructions and/or data. The processor 1220 may cooperate with the memory 1230. The processor 1220 may execute the program instructions stored in the memory 1230. When the instructions or a program stored in the memory 1230 is executed, the processor 1220 is configured to perform operations performed by the processing module 1101 in the foregoing embodiments, and the communication interface 1210 is configured to perform operations performed by the transmitting-receiving module 1102 in the foregoing embodiments.

The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. At least one of the memory 1230 may be included in the processor 1220.

In this embodiment of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver or communication interface integrated with a sending function and a receiving function.

The apparatus 1200 may further include a communication line 1240. The communication interface 1210, the processor 1220, and the memory 1230 may be connected to each other through the communication line 1240. The communication line 1240 may be a peripheral component interconnect (peripheral component interconnect, PCI for short) bus, an extended industry standard architecture (extended industry standard architecture, EISA for short) bus, or the like. The communication line 1240 may be classified into an address bus, a data bus, a control bus, and the like. For ease of representation, only one bold line is used for representation in FIG. 12, but this does not mean that there is only one bus or only one type of bus.

Based on the foregoing content and a same concept, an embodiment of this application provides a computer-readable storage medium. The computer-readable storage medium stores a computer program or instructions. When the computer program or the instructions are executed by a communication apparatus, the communication apparatus implements corresponding functions of the donor node in the foregoing method embodiments, or implements corresponding functions of the IAB node in the foregoing method embodiments, or implements corresponding functions of the UE in the foregoing method embodiments.

Based on the foregoing content and a same concept, an embodiment of this application provides a computer program product. When a communication apparatus reads and executes the computer program product, the communication apparatus performs corresponding functions of the donor node in the foregoing method embodiments, or performs corresponding functions of the IAB node in the foregoing method embodiments, or performs corresponding functions of the UE in the foregoing method embodiments.

Based on the foregoing content and a same concept, an embodiment of this application provides a communication system. The communication system includes the donor node, the IAB node, and the UE in the foregoing method embodiments.

It may be understood that various numbers in embodiments of this application are merely used for differentiation for ease of description, and are not used to limit the scope of embodiments of this application. Sequence numbers of the foregoing processes do not mean an execution sequence. The execution sequence of the processes should be determined based on functions and internal logic of the processes.

It is clear that a person skilled in the art can make various modifications and variations to this application without departing from the scope of protection of this application. This application is intended to cover these modifications and variations of this application provided that they fall within the scope of protection defined by the following claims and their equivalent technologies.

## Claims

1. A communication method, comprising:
sending, by a donor node, first information to an integrated access and backhaul IAB node, wherein the first information indicates that the IAB node is to send a mobility state of the IAB node to the donor node; and
receiving, by the donor node, the mobility state from the IAB node.

2. The method according to claim 1, wherein when the IAB node is in inactive state or idle state, the mobility state of the IAB node is determined by the IAB node based on a first speed state parameter and a record of performing cell reselection by the IAB node; and/or
when the IAB node is in connected state, the mobility state of the IAB node is determined by the IAB node based on a first speed state parameter and a record of performing cell handover by the IAB node, wherein
the first speed state parameter is used by the IAB node to determine the mobility state of the IAB node.

3. The method according to claim 1 or 2, wherein the first information comprises one or more of the following:
first capability information, indicating that the donor node has a capability of providing a service for a mobile IAB node and a non-mobile IAB node;
second capability information, indicating that the donor node has a capability of providing a service for a mobile IAB node;
a first report indication, indicating that the IAB node is to send the mobility state of the IAB node to the donor node; or
the first speed state parameter, used by the IAB node to determine the mobility state of the IAB node.

4. The method according to any one of claims 1 to 3, wherein the method further comprises:
when determining that the IAB node migrates from being managed by the donor node to being managed by another donor node, sending, by the donor node, a handover request to the another donor node, wherein the handover request comprises the mobility state of the IAB node.

5. The method according to any one of claims 1 to 4, wherein the method further comprises:
sending, by the donor node, second information to a user equipment UE, wherein the second information is used for the UE to send a mobility state of the UE to the donor node;
receiving, by the donor node, the mobility state from the UE; and
determining, by the donor node based on the mobility state of the UE, whether the UE and the IAB node move together.

6. The method according to claim 5, wherein when the UE is in inactive state or idle state, the mobility state of the UE is determined by the UE based on a second speed state parameter and a record of performing cell reselection by the UE; and/or
when the UE is in connected state, the mobility state of the UE is determined by the UE based on a second speed state parameter and a record of performing cell handover by the UE, wherein
the second speed state parameter is used by the UE to determine the mobility state of the UE.

7. The method according to claim 5 or 6, wherein the second information comprises one or more of the following:
a second report indication, indicating the UE to send the mobility state of the UE to the donor node; or
the second speed state parameter for determining the mobility state of the UE by the UE.

8. The method according to any one of claims 5 to 7, wherein the determining, by the donor node based on the mobility state of the UE, whether the UE and the IAB node move together comprises:
when determining that the mobility state of the UE is the same as the mobility state of the IAB node, determining, by the donor node, that the UE and the IAB node move together.

9. A communication method, comprising:
receiving, by an integrated access and backhaul IAB node, first information from a donor node; and
sending, by the IAB node, a mobility state of the IAB node to the donor node based on the first information.

10. The method according to claim 9, wherein when the IAB node is in inactive state or idle state, the mobility state of the IAB node is determined by the IAB node based on a first speed state parameter and a record of performing cell reselection by the IAB node; and/or
when the IAB node is in connected state, the mobility state of the IAB node is determined by the IAB node based on a first speed state parameter and a record of performing cell handover by the IAB node, wherein
the first speed state parameter is used by the IAB node to determine the mobility state of the IAB node.

11. The method according to claim 9 or 10, wherein the first information comprises one or more of the following:
first capability information, indicating that the donor node has a capability of providing a service for a mobile IAB node and a non-mobile IAB node;
second capability information, indicating that the donor node has a capability of providing a service for a mobile IAB node;
a first report indication, indicating that the IAB node is to send the mobility state of the IAB node to the donor node; or
the first speed state parameter, used by the IAB node to determine the mobility state of the IAB node.

12. A communication method, comprising:
receiving, by a user equipment UE, second information from a donor node; and
sending, by the UE, a mobility state of the UE to the donor node based on the second information.

13. The method according to claim 12, wherein when the UE is in inactive state or idle state, the mobility state of the UE is determined by the UE based on a second speed state parameter and a record of performing cell reselection by the UE; and/or
when the UE is in connected state, the mobility state of the UE is determined by the UE based on a second speed state parameter and a record of performing cell handover by the UE, wherein
the second speed state parameter is used by the UE to determine the mobility state of the UE.

14. The method according to claim 12 or 13, wherein the second information comprises one or more of the following:
a second report indication, indicating the UE to send the mobility state of the UE to the donor node; or
the second speed state parameter, used by the UE to determine the mobility state of the UE.

15. A communication apparatus, comprising a processing module and a transmitting-receiving module, wherein
the transmitting-receiving module is configured to receive and send information;
the processing module is configured to control the transmitting-receiving module to send first information to an integrated access and backhaul IAB node, wherein the first information indicates that the IAB node is to send a mobility state of the IAB node to the donor node; and
the processing module is further configured to control the transmitting-receiving module to receive the mobility state from the IAB node.

16. The apparatus according to claim 15, wherein when the IAB node is in inactive state or idle state, the mobility state of the IAB node is determined by the IAB node based on a first speed state parameter and a record of performing cell reselection by the IAB node; and/or
when the IAB node is in connected state, the mobility state of the IAB node is determined by the IAB node based on a first speed state parameter and a record of performing cell handover by the IAB node, wherein
the first speed state parameter is used by the IAB node to determine the mobility state of the IAB node.

17. The apparatus according to claim 15 or 16, wherein the first information comprises one or more of the following:
first capability information, indicating that the donor node has a capability of providing a service for a mobile IAB node and a non-mobile IAB node;
second capability information, indicating that the donor node has a capability of providing a service for a mobile IAB node;
a first report indication, indicating that the IAB node is to send the mobility state of the IAB node to the donor node; or
the first speed state parameter, used by the IAB node to determine the mobility state of the IAB node.

18. The apparatus according to any one of claims 15 to 17, wherein the processing module is further configured to:
when determining that the IAB node migrates from being managed by the donor node to being managed by another donor node, control the transmitting-receiving module to send a handover request to the another donor node, wherein the handover request comprises the mobility state of the IAB node.

19. The apparatus according to any one of claims 15 to 18, wherein the processing module is further configured to:
control the transmitting-receiving module to send second information to a user equipment UE, wherein the second information is used for the UE to send a mobility state of the UE to the donor node; and receive the mobility state from the UE; and
determine, based on the mobility state of the UE, whether the UE and the IAB node move together.

20. The apparatus according to claim 19, wherein when the UE is in inactive state or idle state, the mobility state of the UE is determined by the UE based on a second speed state parameter and a record of performing cell reselection by the UE; and/or
when the UE is in connected state, the mobility state of the UE is determined by the UE based on a second speed state parameter and a record of performing cell handover by the UE, wherein
the second speed state parameter is used by the UE to determine the mobility state of the UE.

21. The apparatus according to claim 19 or 20, wherein the second information comprises one or more of the following:
a second report indication, indicating the UE to send the mobility state of the UE to the donor node; or
the second speed state parameter for determining the mobility state of the UE by the UE.

22. The apparatus according to any one of claims 19 to 21, wherein when determining, based on the mobility state of the UE, whether the UE and the IAB node move together, the processing module is specifically configured to:
when determining that the mobility state of the UE is the same as the mobility state of the IAB node, determine that the UE and the IAB node move together.

23. A communication apparatus, comprising a processing module and a transmitting-receiving module, wherein
the transmitting-receiving module is configured to receive and send information; and
the processing module is configured to: control the transmitting-receiving module to receive first information from a donor node; and control, based on the first information, the transmitting-receiving module to send a mobility state of an integrated access and backhaul IAB node to the donor node.

24. The apparatus according to claim 23, wherein when the IAB node is in inactive state or idle state, the mobility state of the IAB node is determined by the IAB node based on a first speed state parameter and a record of performing cell reselection by the IAB node; and/or
when the IAB node is in connected state, the mobility state of the IAB node is determined by the IAB node based on a first speed state parameter and a record of performing cell handover by the IAB node, wherein
the first speed state parameter is used by the IAB node to determine the mobility state of the IAB node.

25. The apparatus according to claim 23 or 24, wherein the first information comprises one or more of the following:
first capability information, indicating that the donor node has a capability of providing a service for a mobile IAB node and a non-mobile IAB node;
second capability information, indicating that the donor node has a capability of providing a service for a mobile IAB node;
a first report indication, indicating that the IAB node is to send the mobility state of the IAB node to the donor node; or
the first speed state parameter, used by the IAB node to determine the mobility state of the IAB node.

26. A communication apparatus, comprising a processing module and a transmitting-receiving module, wherein
the transmitting-receiving module is configured to receive and send information; and
the processing module is configured to: control the transmitting-receiving module to receive second information from a donor node; and control, based on the second information, the transmitting-receiving module to send a mobility state of a user equipment UE to the donor node.

27. The apparatus according to claim 26, wherein when the UE is in inactive state or idle state, the mobility state of the UE is determined by the UE based on a second speed state parameter and a record of performing cell reselection by the UE; and/or
when the UE is in connected state, the mobility state of the UE is determined by the UE based on a second speed state parameter and a record of performing cell handover by the UE, wherein
the second speed state parameter is used by the UE to determine the mobility state of the UE.

28. The apparatus according to claim 26 or 27, wherein the second information comprises one or more of the following:
a second report indication, indicating the UE to send the mobility state of the UE to the donor node; or
the second speed state parameter, used by the UE to determine the mobility state of the UE.

29. A computer-readable storage medium, wherein the computer-readable storage medium stores a computer program or instructions; and when the computer program or the instructions are executed by a communication apparatus, the method according to any one of claims 1 to 8 is implemented, or the method according to any one of claims 9 to 11 is implemented, or the method according to any one of claims 12 to 14 is implemented.

30. A communication apparatus, comprising a processor, wherein the processor is connected to a memory, the memory is configured to store a computer program, and the processor is configured to execute the computer program stored in the memory, to enable the communication apparatus to perform the method according to any one of claims 1 to 8, or enable the communication apparatus to perform the method according to any one of claims 9 to 11, or enable the communication apparatus to perform the method according to any one of claims 12 to 14.
